# EUROPEAN PATENT APPLICATION

(11) **EP 4 765 541 A1**
(43) Date of publication of application: **24.06.2026**
(21) Application number: 25211269.3
(22) Date of filing: 27.10.2025
(51) Int. Cl.: H02J 1/102, H02J 4/25

(54) **POWER CONVERSION APPARATUS**

(30) Priority: 18.12.2024 KR 20240190064
(71) Applicant: Hanwha Solutions Corporation, Jung-gu Seoul 04541 (KR)
(72) Inventor: OH, Jae Sung, Seoul 04541 (KR); CHOI, Moon Sung, Seoul 04541 (KR)
(74) Representative: Mooser, Sebastian Thomas

(57) **Abstract**

Provided is a power conversion apparatus. The power conversion apparatus includes an alternating current (AC)-direct current (DC) switched mode power supply (SMPS) configured to receive AC power from an AC power source and output DC power and a DC-DC SMPS configured to receive DC power supplied from each of one or more DC power sources and DC power output by the AC-DC SMPS, and supply DC power to one or more loads.

## Description

### BACKGROUND

### 1. Field

The present disclosure relates to a power conversion apparatus.

### 2. Description of the Related Art

A power conversion apparatus may refer to an apparatus for converting applied power and outputting the converted power to another system or device. In particular, in a photovoltaic power generation system, a power conversion apparatus may perform a function of converting power generated from a photovoltaic module or power stored in a battery and transmitting the converted power to other devices such as a grid, a load, etc.

A switched mode power supply (SMPS) is a power supply device and is widely used in various electronic devices such as computers, televisions (TVs), industrial electronic equipment, etc. When compared to linear power supply devices, the SMPS has high energy efficiency and high stability.

### SUMMARY

The present disclosure aims to provide a power conversion apparatus. The problem that the present disclosure aims to solve is not limited to the problems mentioned above, and other problems and advantages of the present disclosure that are not mentioned can be understood through the following description and can be understood more clearly by the examples of the present disclosure. In addition, it will be appreciated that the problems and advantages to be solved by the present disclosure may be realized by means and combinations thereof indicated in the claims.

According to a first aspect of the present disclosure, a power conversion apparatus includes an alternating current (AC)-direct current (DC) switched mode power supply (SMPS) configured to receive AC power from an AC power source and output DC power and a DC-DC SMPS configured to receive DC power supplied from each of one or more DC power sources and DC power output by the AC-DC SMPS, and supply DC power to one or more loads.

According to a second aspect of the present disclosure, a photovoltaic power generation system includes one or more photovoltaic modules configured to generate power, a grid configured to transmit power generated at a power plant, a power storage device configured to store power generated by the one or more photovoltaic modules, one or more loads configured to consume the supplied power, and a power conversion apparatus configured to convert power supplied by the one or more photovoltaic modules, the grid, and the power storage device and transmit the converted power to the one or more loads, wherein the power conversion apparatus includes an alternating current (AC)-direct current (DC) switched mode power supply (SMPS) configured to receive AC power from the grid and output DC power, and a DC-DC SMPS configured to receive DC power supplied from the one or more photovoltaic modules, DC power applied from the power storage device, and DC power output by the AC-DC SMPS, and supply DC power to the one or more loads.

According to a third aspect of the present disclosure, an energy storage device includes a plurality of battery cells and a power conversion module, and the power conversion module includes an alternating current (AC)-direct current (DC) switched mode power supply (SMPS) configured to receive AC power from an AC power source and output DC power and a DC-DC SMPS configured to receive DC power supplied from each of one or more DC power sources and DC power output by the AC-DC SMPS, and supply DC power to one or more loads

In addition, another method and another system for implementing the present disclosure, and a computer-readable recording medium having stored therein a computer program for executing the method may be further provided.

Other aspects, features, advantages, and advantages other than those described above will become apparent from the following figures, claims, and the detailed description of the present disclosure.

### BRIEF DESCRIPTION OF THE DRAWINGS

The above and other aspects, features, and advantages of certain embodiments of the disclosure will be more apparent from the following description taken in conjunction with the accompanying drawings in which:
FIG. 1 is a block diagram showing a conventional power conversion system;
FIG. 2 is a block diagram of a power conversion system according to an embodiment of the present disclosure;
FIG. 3 is a block diagram of a power conversion system according to another embodiment of the present disclosure;
FIG. 4 is a block diagram illustrating a photovoltaic power generation system according to an embodiment of the present disclosure; and
FIG. 5 is a view for schematically describing a power supply system according to the present disclosure.

### DETAILED DESCRIPTION

Advantages and features of the present disclosure, and a method of achieving them will be apparent with reference to the embodiments described in detail in conjunction with the drawings. However, the present disclosure is not limited to the embodiments presented below, but may be implemented in various different forms, and should be understood to include all transformations, equivalents, and substitutes included in the spirit and technical scope of the present disclosure. Embodiments presented below are provided to complete the disclosure of the present disclosure and perfectly inform those of ordinary skill in the art of the category of the present disclosure. In describing the present disclosure, in case that it is determined that a detailed description of related known technologies may obscure the gist of the present disclosure, the detailed description thereof will be omitted.

The term used herein is used to describe particular embodiments, and is not intended to limit the present disclosure. Singular forms may include plural forms unless apparently indicated otherwise contextually. It should be understood that the term "include", "have", or the like used herein is to indicate the presence of features, numbers, steps, operations, elements, parts, or a combination thereof described in the specifications, and does not preclude the presence or addition of one or more other features, numbers, steps, operations, elements, parts, or a combination thereof.

Some embodiments of the present disclosure may be represented by functional block configurations and various processing steps. Some or all of the functional blocks may be implemented with various numbers of hardware and/or software configurations executing particular functions. In some embodiments, the functional blocks of the present disclosure may be implemented by one or more microprocessors or circuit configurations for certain functions. In some embodiments, functional blocks of the present disclosure may be implemented in various programming or scripting languages. Functional blocks may be implemented as algorithms running on one or more processors. The present disclosure may employ related art for electronic environment setting, signal processing, and/or data processing, etc. The term such as "mechanism", "element", "means", or "configuration" may be used broadly and may not be limited to mechanical and physical configurations.

Additionally, connection lines or connection members between components shown in the drawings merely exemplify functional connections and/or physical or circuit connections. In an actual device, connections between components may be represented by various replaceable or additional functional connections, physical connections, or circuit connections.

Additionally, "activating" or "deactivating" a functional block or component of the present disclosure may mean performing or not performing an operation through turning a switch on/off. That is, in case that a function block or component is activated, it may mean that the switch of the function block or component is turned on and operates, thereby forming an electrical connection with the surrounding function blocks or components. On the other hand, in case that a function block or component is deactivated, it may mean that the switch of the function block or component is turned off and does not operate, thereby blocking the electrical connection with the surrounding function blocks or components.

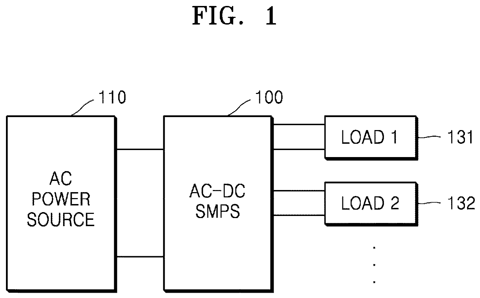

FIG. 1 is a block diagram showing a conventional power conversion system.

In the conventional power conversion system, as a power conversion apparatus, an alternating current (AC)-direct current (DC) switched mode power supply (SMPS) 100 may receive AC power from an AC power source 110.

Although not shown in FIG. 1, the AC-DC SMPS 100 may include a rectifier circuit for rectifying the applied AC power, a filtering circuit for generating a precise output, a transformer, and/or a control circuit for controlling an operation of the AC-DC SMPS 100.

Power passing through the rectifier circuit and/or filtering circuit may be applied to a switching circuit which may include switching elements such as a transistor.

The power passing through the switching circuit may be converted to a required voltage level through the transformer.

Referring to FIG. 1, the AC-DC SMPS 100 may be a multi-output SMPS and may output power to one or more loads including a first load 131 and a second load 132. The powers respectively output (e.g., a magnitude of the power) to the one or more loads may be different from each other.

As described above, in a conventional power conversion system, the power conversion apparatus may receive AC power and output DC power to a load. However, in a system such as a photovoltaic power generation system, not only an AC power source but also a DC power source may be included, and flexible switching between the AC power source and the DC power source may be required depending on a need.

The power conversion apparatus according to various embodiments of the present disclosure may be capable of flexibly switching between one or more power sources.

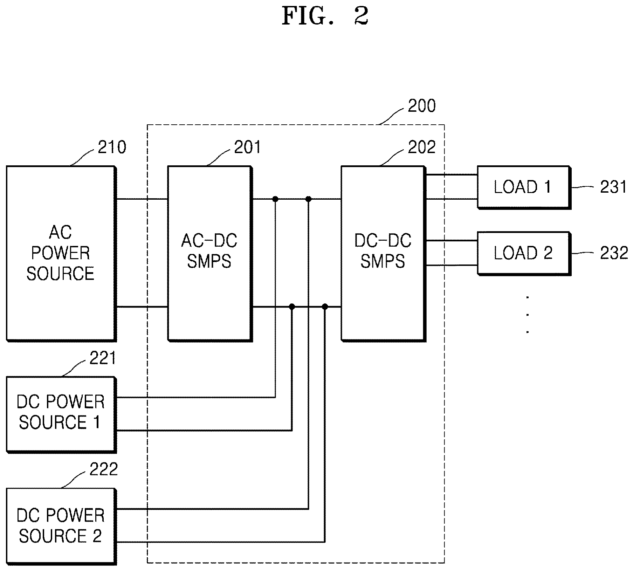

FIG. 2 is a block diagram of a power conversion system according to an embodiment of the present disclosure.

In an embodiment, the power conversion system shown in FIG. 2 may be included in a photovoltaic power generation system.

Referring to FIG. 2, the power conversion system according to an embodiment may include a power conversion apparatus 200 according to an embodiment.

In an embodiment, the power conversion apparatus 200 may include an AC-DC SMPS 201 and a DC-DC SMPS 202. The AC-DC SMPS 201 and the DC-DC SMPS 202 may be connected to each other.

In an embodiment, AC power may be applied from an AC power source 210 as an input to the AC-DC SMPS 201. In an embodiment, DC power may be output as an output of the AC-DC SMPS 201, and the output of the AC-DC SMPS 201 may be applied to the DC-DC SMPS 202.

Although not shown in FIG. 2, the AC-DC SMPS 201 may include a rectifier circuit for rectifying the applied AC power of the AC power source 210, a filtering circuit for generating a precise output, a transformer, and/or a control circuit for controlling an operation of the AC-DC SMPS 100.

Power passing through the rectifier circuit and/or filtering circuit may be applied to a switching circuit, which may include switching elements such as transistors.

The power passing through the switching circuit may be converted to a required voltage level through the transformer.

In an embodiment, as described above, DC power may be applied as an input of the DC-DC SMPS 202 and as an output of the AC-DC SMPS 201. In an embodiment, DC power may be applied from each of one or more DC power sources including a first DC power source 221 and a second DC power source 222, as an input to the DC-DC SMPS 202.

Although not shown in FIG. 2, the DC-DC SMPS 202 may include a switching circuit for switching the applied DC power, a filtering circuit for storing and filtering energy, and/or a control circuit for controlling an operation of the DC-DC SMPS 202.

In an embodiment, the DC-DC SMPS 202 may be a multi-output SMPS. Referring to FIG. 2, the DC-DC SMPS 202 may supply power to one or more loads including a first load 231 and a second load 232. The powers respectively output (e.g., a magnitude of the power) to the one or more loads may be different from each other.

In an embodiment, the AC power source 210 may be any type of AC power source, for example, a grid. The grid may refer to a system that transmits and distributes power generated by a photovoltaic power generation system, or that supplies external energy to the photovoltaic power generation system.

In an embodiment, each of the one or more DC power sources including the first DC power source 221 and the second DC power source 222 may be any type of DC power source, for example, any one of a battery (or a power storage device), a photovoltaic module, etc. The battery may refer to a device that stores power supplied to the photovoltaic power generation system. The photovoltaic module may mean a device that produces electricity based on the light energy of the sun.

The power conversion system according to the present disclosure may selectively control a power source that supplies power to the power conversion apparatus 200 or selectively controls a power source that primarily supplies power. In some embodiments, in an embodiment, the power conversion system may control power not to be supplied by the AC power source 210, as needed. In an embodiment, the power conversion system may control power not to be applied by at least some of the one or more DC power sources, as needed. In an embodiment, the power conversion system may select either an AC power source or one or more DC power sources as a primary power source.

In an embodiment, the power conversion system may determine and control whether to apply power to the power conversion system from each of one or more power sources, or select a power source to primarily receive power, based on various factors such as a power consumption amount of the load, a power generation amount, a charge amount of the battery, a power usage fee, etc.

Hereinbelow, an example will be described in which the AC power source 210 is a grid, the first DC power source 221 is a battery, and the second DC power source 222 is a photovoltaic module. In some embodiments, in case that sufficient power may be supplied to one or more loads merely with the first DC power source 221 or the second DC power source 222, the power conversion system may control power not to be applied by the AC power source 210. In some embodiments, in case that it is difficult to supply sufficient power to one or more loads merely with the first DC power source 221 or the second DC power source 222, the power conversion system may control power to be applied by the AC power source 210. In some embodiments, in case that sufficient power may be supplied to one or more loads merely with the second DC power source 222 during the day with high the sunlight energy, the power conversion system may control power not to be applied by the first DC power source 221. In some embodiments, on the other hand, in case that it is difficult to apply sufficient power to one or more loads with the second DC power source 222 at night with low sunlight energy, the power conversion system may control power to be supplied by the first DC power source 221 or the AC power source 210. In some embodiments, in case that it is difficult to supply sufficient power to one or more loads merely with the second DC power source 222 and the amount of charge of the first DC power source 221 is low, during the day with high sunlight energy, power may be controlled to be supplied by the AC power source 210. Based on the power generation amount of the second DC power source 222, the AC power source 210 or the second DC power source 222 may be controlled to be used as a primary power source. In some embodiments, during a period with a high power usage fee, the photovoltaic power generation system may control power not to be applied by the AC power source 210.

Control of power application from the AC power source 210 by the power conversion system may be performed by controlling the operation of the AC-DC SMPS 201. Control of power application from the AC power source 210 by the power conversion system may include controlling the operation of the AC-DC SMPS 201.

Selective control of a power source applying power or selective control of a power source primarily supplying power, by the power conversion system, may be performed by a controller (not shown) included in or provided separately from the power conversion system, In some embodiments, a processor included in the controller. The controller may measure or detect values applied to each element in the power conversion system and control the operation of the power conversion system based on the measured or detected values.

Meanwhile, in FIG. 2, although the first load 231 and the second load 232 are illustrated as being connected to the output terminal of the power conversion apparatus 200, in one embodiment, one or more batteries may be connected to the output terminal of the power conversion apparatus 200.

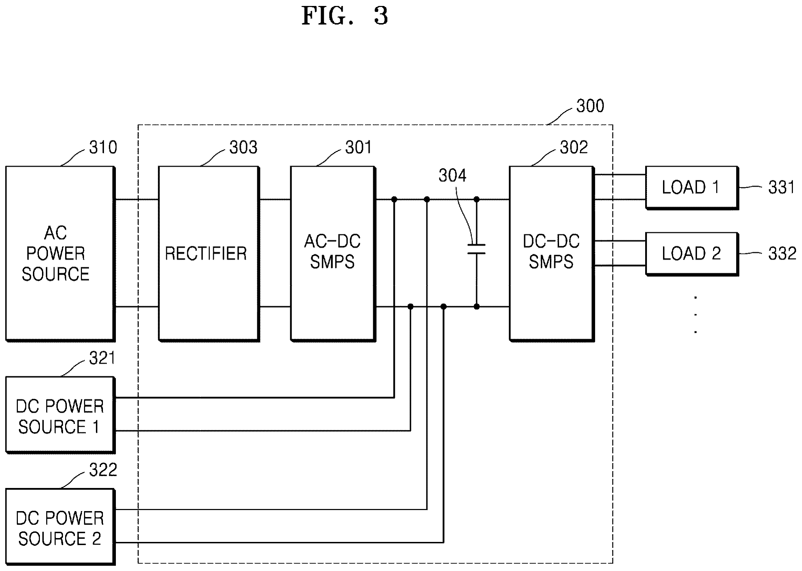

FIG. 3 is a block diagram of a power conversion system according to another embodiment of the present disclosure.

In an embodiment, the power conversion system shown in FIG. 3 may be included in a photovoltaic power generation system.

Referring to FIG. 3, the power conversion system according to an embodiment may include a power conversion apparatus 300 according to an embodiment. The power conversion apparatus 300 of FIG. 3 may further include a rectifier 303 and a link capacitor 304 when compared to the power conversion apparatus 200 of FIG. 2.

In an embodiment, the power conversion apparatus 300 may include an AC-DC SMPS 301 and a DC-DC SMPS 302. In an embodiment, the power conversion apparatus 300 may further include the rectifier 303 and the link capacitor 304.

In an embodiment, AC power applied from an AC power source 310 may be supplied to the rectifier 303. The rectifier 303 may rectify AC power supplied from the AC power source 310 and output the rectified AC power to the AC-DC SMPS 301.

In an embodiment, the rectifier 303 may include any type of rectifier circuit. In some embodiments, the rectifier 303 may include a half-wave rectifier circuit, a full-wave rectifier circuit, a bridge rectifier circuit, a voltage doubler circuit, etc.

In an embodiment, the power conversion apparatus 300 may further include the rectifier 303, such that the DC power, which is an output of the AC-DC SMPS 301, may be output more stably.

In an embodiment, the output of the rectifier 303 may be input to the AC-DC SMPS 301, and DC power may be output as the output of the AC-DC SMPS 301. The output of the AC-DC SMPS 301 may be applied to the DC-DC SMPS 302.

Although not shown in FIG. 3, the AC-DC SMPS 301 may include a rectifier circuit, a filtering circuit for generating a refined output, a transformer, and/or a control circuit for controlling the operation of the AC-DC SMPS 301.

Power passing through the rectifier circuit and/or filtering circuit may be applied to a switching circuit, which may include switching elements such as transistors.

The power passing through the switching circuit may be converted to a required voltage level through the transformer.

As described above, the DC power, which is the output of the AC-DC SMPS 301, may be applied as the input of the DC-DC SMPS 302. In an embodiment, DC power may be applied from each of one or more DC power sources including a first DC power source 321 and a second DC power source 322, as an input to the DC-DC SMPS 302.

Although not shown in FIG. 3, the DC-DC SMPS 302 may include a switching circuit for switching the applied DC power, a filtering circuit for storing and filtering energy, and/or a control circuit for controlling an operation of the DC-DC SMPS 302.

In an embodiment, the DC-DC SMPS 302 may be a multi-output SMPS. Referring to FIG. 3, the DC-DC SMPS 302 may output power for one or more loads including a first load 331 and a second load 332. The powers respectively output (e.g., a magnitude of the power) to the one or more loads may be different from each other.

As described above, the power conversion apparatus 300 may include the link capacitor 304.

In an embodiment, the link capacitor 304 may be connected to an input terminal of the DC-DC SMPS 302. The applied DC power may be detected through the link capacitor 304 of the power conversion apparatus 300. The operation of the power conversion apparatus 300 may be controlled through the DC power detected through the link capacitor 304.

In an embodiment, the operation of the power conversion apparatus 300 may be controlled based on the link capacitor 304 and one or more preset threshold values. In an embodiment, in case that a voltage detected through the link capacitor 304 is at least a first threshold value, the AC-DC SMPS 301 may be controlled to be deactivated. In some embodiments, an output voltage of the AC-DC SMPS 301 may be 100 VDC, and the first threshold value may be 200 VDC. In another example, in case that a voltage detected through the link capacitor 304 is less than a second threshold value, power may be controlled to be applied from the first DC power source 321, and in case that a voltage detected through the link capacitor 304 is greater than the second threshold value, power may be controlled to be applied from the second DC power source 322. In some embodiments, the second threshold may be 250 VDC, the first DC power source 321 may be a battery, and the second DC power source 322 may be a photovoltaic module. One or more preset threshold values, such as the first threshold value, the second threshold value, and the third threshold value, may be suitably set based on specifications of components of the power conversion system, such as an operating range of power sources.

As shown in FIG. 3, the link capacitor 304 may be commonly connected to an input terminal of the DC-DC SMPS 302, i.e., to correspond to all of the applied DC powers, but in an embodiment, the link capacitor 304 may be individually connected to each of one or more DC powers. That is, in some embodiments, a first link capacitor corresponding to the output of the AC-DC SMPS 301, a second link capacitor corresponding to the first DC power source, a third link capacitor corresponding to the second DC power source, etc., may be included in the power conversion apparatus 300.

Meanwhile, in FIG. 3, although the first load 331 and the second load 332 are illustrated as being connected to the output terminal of the power conversion apparatus 300, in one embodiment, one or more batteries may be connected to the output terminal of the power conversion apparatus 300.

The examples of the AC power source 210, the first DC power source 221, and the second DC power source 222, and the examples of control of power applied to a power conversion apparatus of a power conversion system, etc., described above with reference to FIG. 2, may also be applied to the power conversion system shown in FIG. 3. Therefore, a redundant description will not be provided.

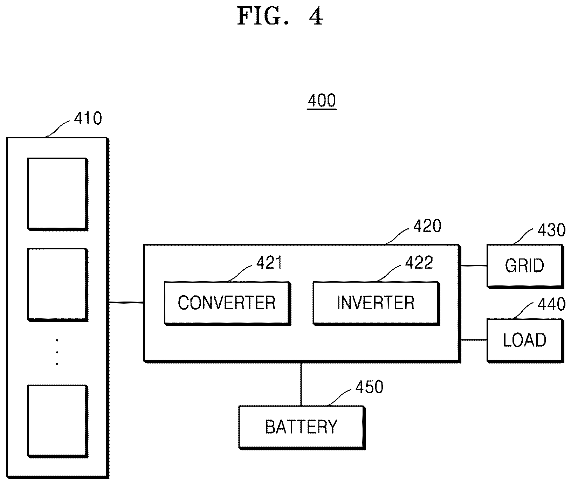

FIG. 4 is a block diagram illustrating a photovoltaic power generation system according to an embodiment of the present disclosure.

Referring to FIG. 4, a photovoltaic power generation system 400 according to an embodiment may include one or more photovoltaic modules 410, a power conversion apparatus 420, a grid 430, a load 440, and/or a power storage device 450.

The one or more photovoltaic modules 410 may generate power based on sunlight energy and may include a plurality of solar cells.

The power conversion apparatus 420 may refer to an apparatus that converts power supplied from a power source in a photovoltaic power generation system 400 and transmits the converted power to a power demand source in the photovoltaic power generation system 400. The power conversion apparatus 420 may include a converter 421 and an inverter 422. In an embodiment, the converter 421 may be a DC-DC converter. In an embodiment, the inverter 422 may convert DC power into AC power. Devices that may be included in the power conversion apparatus 420 are not limited to the devices described above.

The power conversion apparatus 420 may convert power generated by the one or more photovoltaic modules 410 and transmit the generated power to the grid 430, the load 440, etc. The power conversion apparatus 420 may convert power supplied from the grid 430 and transmit the power to the load 440, the power storage device 450, etc. The power conversion apparatus 420 may convert power supplied from the power storage device 450 and transmit the converted power to the load 440, etc.

The power conversion apparatus 420 shown in FIG. 4 may be a power conversion apparatus according to various embodiments described above with reference to FIGS. 2 and 3. In some embodiments, the power conversion apparatus may include an AC-DC SMPS that receives AC power from an AC power source and outputs DC power, and a DC-DC SMPS that receives DC power supplied from each of one or more DC power sources and DC power output by the AC-DC SMPS, and supplies DC power to one or more loads.

The grid 430 may refer to a system that transmits and distributes power generated by the photovoltaic power generation system 400 or supplies external energy to the photovoltaic power generation system 400. The grid 430 may transmit power generated at a power plant to the photovoltaic power generation system 400 or transmit surplus power generated by the photovoltaic power generation system 400 to the outside.

The load 440 may mean an object that consumes power supplied by the photovoltaic power generation system 400. The load 440 may include home appliances such as a washing machine, a refrigerator, a TV, etc.

The power storage device 450 may receive and store power generated from the one or more photovoltaic modules 410. The power storage device 450 may include an ESS capable of storing generated power and efficiently supplying power to the load 440 when the power is needed by the load 440.

In addition to the components shown in FIG. 4, the photovoltaic power generation system 400 may include any suitable components for operating the photovoltaic power generation system 400. In some embodiments, the photovoltaic power generation system 400 may include a connection section through which power moves within the photovoltaic power generation system 400, a distribution panel that distributes power within the photovoltaic power generation system 400, a monitoring device for monitoring the photovoltaic power generation system 400, etc.

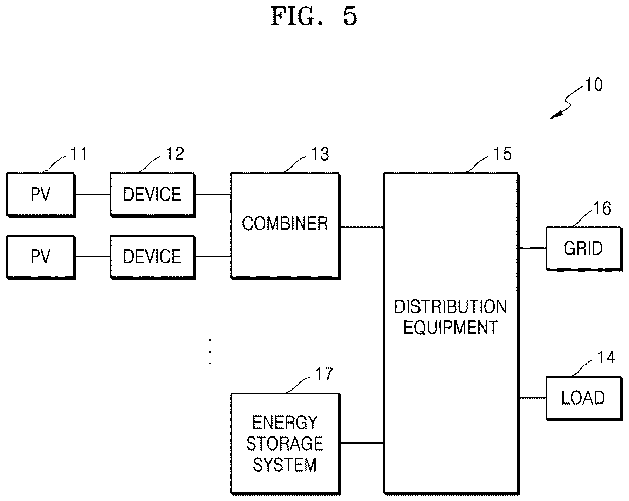

FIG. 5 is a view for schematically describing a power supply system according to the present disclosure.

Referring to FIG. 5, a power supply system 10 may include a photovoltaic module 11, a device 12, a load 14, and/or distribution equipment 15. The power supply system 10 may be connected to an external grid 16.

At least one photovoltaic module 11 may be installed on the roof or exterior wall of a building to generate power. A plurality of photovoltaic modules 11 may be connected to form a photovoltaic module array.

The photovoltaic module 11 may be connected to the device 12. In some embodiments, at least one device 12 may be connected to each photovoltaic module 11. In some embodiments, in case that one device 12 is connected to each photovoltaic module 11, the number of devices 12 constituting the power supply system 10 may be equal to the number of photovoltaic modules 11.

The device 12 may be a power conditioning system or power conversion system (PCS) that performs power conversion for power generated from the photovoltaic module 11. In some embodiments, the device 12 may perform selected conversion on the power generated from the photovoltaic module 11 and supply the converted power to other components of the power supply system 10 (e.g., the grid 16 and/or the load 14, etc.).

The device 12 may be a module level power electronics (MLPE) device. In some embodiments, the device 12 may be an optimizer or a micro inverter (MI).

In some embodiments, in case that the device 12 is an optimizer, the device 12 may regulate the power generated from the photovoltaic module 11 and output the regulated power to an inverter (e.g., a string inverter). Current converted by the inverter (e.g., direct current converted into alternating current) may be output to the grid 16 or the load 14.

In some embodiments, in case that the device 12 is a micro inverter, the device 12 may convert the power generated from the photovoltaic module 11 (e.g., convert direct current into alternating current). The current converted in the device 12 may be output to the grid 16 or the load 14.

Depending on a need, the power supply system 10 may further include a combiner 13. At least a part of the device 12 may be connected to the distribution equipment 15 through the combiner 13. In some embodiments, power output from a plurality of devices 12 may be combined into one output by the combiner 13 and supplied to the distribution equipment 15.

The device 12 and the distribution equipment 15 may be connected by a power path that does not include the combiner 13, and at least one device 12 may be connected to the distribution equipment 15 by a power path that does not include the combiner 13, and at least one other device 12 may be connected to the distribution equipment 15 through the combiner 13.

The combiner 13 may control voltage, current and/or power output from the device 12 according to a power supply state of the photovoltaic module 11, the device 12, and/or the grid 16, and set the operation mode of the combiner 13 to a diagnosis mode or a driving mode, etc.

The combiner 13 may include an energy management system (EMS) that controls the operation of the combiner 13. The EMS may control voltage, current and/or power supplied to or output from the device 12 according to a power supply state of the photovoltaic module 11, the device 12, and/or the grid 16, and set the operation mode of the combiner 13 to the diagnosis mode or the driving mode, etc.

The one or more loads 14 may refer to an object that is installed in an electricity receiver such as a house, commercial facility, factory, etc., and operates by receiving at least one of energy generated by the photovoltaic module 11, energy stored in an energy storage device 17, and/or energy supplied from the grid 16. In some embodiments, in case that the electricity receiver receiving power is a house, the load 14 may include home appliances such as a washing machine, a refrigerator, a TV, etc.

The grid 16 may include an infrastructure system for generating, transmitting, and distributing power. In some embodiments, the grid 16 may include the infrastructure system such as power plants, substations, power lines, etc. The grid 16 may transmit electric energy generated at a power plant to the power supply system 10 or transmit surplus power generated in the power supply system 10 to the outside of the power supply system 10.

In some embodiments, commercial power transmitted from the grid 16 through a power pole may be supplied to the power receiver through a transformer. The power supply system 10 may be implemented as an off-grid system that is not connected to the grid 16.

The power supply system 10 may further include at least one energy storage device 17. Depending on a need, the power supply system 10 may further include a plurality of energy storage devices 17. The energy storage device 17 may receive and store power generated by the photovoltaic module 11 and/or power transmitted from the grid 16. The energy storage device 17 may efficiently supply power by storing power and supplying power to the load 14 when the load 14 needs the power.

The energy storage device 17 may include a battery that stores power and a power conversion module. The battery may include a plurality of battery cells. The battery includes a battery management system (BMS) that monitors a state of charge (SOC), a state of health (SOH), voltage and/or current of the battery, performs diagnosis on the battery, and performs a safety function such as current cutoff, etc.

The power conversion module may be a PCS that performs conversion between battery-side power and opposite-side power. In some embodiments, the PCS may convert between direct current on the battery side and alternating current on the opposite side. As an example, the PCS may include a bidirectional DC-DC converter that is connected to the battery to convert voltage, and a bidirectional inverter that connects the DC-DC converter to the outside of the energy storage device 17.

The power conversion module may include the power conversion apparatus according to embodiments of the present disclosure.

The energy storage device 17 may further include an EMS that controls the operation of the energy storage device 17. The EMS may control the voltage, current and/or power supplied to or output from the energy storage device 17 according to the power supply state of the battery and/or the grid 16, and may set the operation mode of the energy storage device 17 to the diagnosis mode or the driving mode, etc.

Depending on a need, the EMS coupled to a selected component of the power supply system 10 may not only control the operation of a selected component, but may also control operations of other components of the power supply system 10. For example, the EMS coupled to the combiner 13 or the EMS coupled to the energy storage device 17 may control both the operation of the combiner 13 and the operation of the energy storage device 17.

The distribution equipment 15 may provide electrical connection between components of the power supply system 10 and may control a power flow of the power supply system 10. In some embodiments, the distribution equipment 15 may electrically connect the photovoltaic module 11 and the load 14. In some embodiments, the distribution equipment 15 may be connected to the device 12 connected to the photovoltaic module 11 to electrically connect the photovoltaic module 11 to the load 14. Depending on a need, the distribution equipment 15 may be further connected to at least one of the energy storage device 17 and the grid 16.

In some embodiments, the distribution equipment 15 may be a distribution panel that distributes power within the power supply system 10. In some embodiments, the distribution equipment 15 may be a master service panel (MSP) that distributes the power generated from the photovoltaic module 11 to the load 14, etc.

In some embodiments, the distribution equipment 15 may be a primary controller that performs power distribution within the power supply system and controls each device 12. In some embodiments, the primary controller may include a switch, a circuit breaker, and a control unit. The switch, the circuit breaker and the control unit may each be implemented as an independent device, or at least some of the switch, the circuit breaker and the control unit may be included in a single device.

The primary controller may include a switch that controls electrical connection between components connected to the primary controller, such as the device 12 and the load 14. In some embodiments, the primary controller may include a relay, a power semiconductor, etc., that provides or blocks electrical connection to the device 12 and/or the energy storage device 17 depending on the operating state of each component of the power supply system 10.

The primary controller may perform rapid shutdown to stop power generation of the photovoltaic module 11 in an emergency situation such as overcurrent occurrence in the power supply system 10, etc. To this end, the primary controller may include a circuit breaker that blocks connection between the device 12 and the load 14.

The primary controller may include a control unit that generally controls the operation of the primary controller. In addition to the primary controller, the control unit may control the operations of other components of the power supply system 10, such as the device 12, the energy storage device 17, or the like.

The control unit may perform control on the voltage, current and/or power output from or supplied to each component according to the power supply state of the photovoltaic module 11, the device 12, the combiner 13, the load 14, the grid 16 and/or the energy storage device 17. The control unit may set the operation mode of the primary controller, the device 12 and/or the energy storage device 17 to the diagnosis mode, the driving mode, etc.

In some embodiments, the control unit may control the photovoltaic module 11, the device 12, the combiner 13 and/or the energy storage device 17, based on the state of the power supply system 10. In some embodiments, the control unit may control other components of the power supply system 10 by causing the primary controller to communicate with other components of the power supply system 10, e.g., the device 12, etc. Communication between the primary controller and other components of the power supply system 10 may be performed using power line communication (PLC), but the present disclosure is not limited thereto.

In some embodiments, the control unit may control the device 12 according to the power generation state of the photovoltaic module 11. In some embodiments, the primary controller may receive a control command from a server that monitors the power generation state of the photovoltaic module 11, and the control unit may control the device 12 according to the control command.

The primary controller may supply power to at least a part of the load 14 in case that power supply from the grid 16 is not smooth (e.g., in an off-grid situation, etc.). In some embodiments, in case that power supply from the grid 16 is not smooth, the primary controller may preferentially supply power generated from the photovoltaic module 11 and/or power stored in the energy storage device 17 to a backup load that has a relatively high need for stable power supply.

The power supply system 10 may further include an auxiliary power generation device (e.g., a diesel generator, etc.) that generates power in a separate manner other than photovoltaic power generation. In some embodiments, the auxiliary power generation device may be further connected to the distribution equipment 15. In case that the primary controller may not be able to correspond to a backup load merely with the photovoltaic module 11 and the energy storage device 17 due to environmental factors such as a time zone or weather, the primary controller may supply the power generated by the auxiliary power generation device to the backup load.

The control unit may be implemented by at least one processor. The processor may process a command of a computer program by performing basic arithmetic, logic, and input/output operations. The command may be provided from an internal memory of the primary controller or from an external device. The processor may generally control operations of other components included in the primary controller.

The processor may perform at least some of data analysis, processing, and result information generation for performing the above-described operations using at least one of machine learning, a neural network, or a deep learning algorithm as a rule-based or artificial intelligence algorithm. Examples of neural networks may include architecture-based neural network models such as a convolutional neural network (CNN), a deep neural network (DNN), and a recurrent neural network (RNN).

In some embodiments, the processor may be implemented as an array of a plurality of logic gates, or may be implemented as a combination of a general-purpose microprocessor and a memory storing a program executable on the microprocessor. In some embodiments, a processor may include a general purpose processor, a central processing unit (CPU), a microprocessor, a digital signal processor (DSP), a controller, a microcontroller, a state machine, etc.

In some environments, the processor may include an application specific integrated circuit (ASIC), a programmable logic device (PLD), a field programmable gate array (FPGA), etc. In some embodiments, the processor may refer to a combination of a DSP and a microprocessor, a combination of a plurality of microprocessors, a combination of one or more microprocessors combined with a DSP core, or a combination of processing devices such as any combination of other such components.

The energy storage device 17 shown in FIG. 5 may include the power conversion apparatus according to various embodiments described above with reference to FIGS. 2 and 3. In some embodiments, the power conversion apparatus may include an AC-DC SMPS that receives AC power from an AC power source and outputs DC power, and a DC-DC SMPS that receives DC power supplied from each of one or more DC power sources and DC power output by the AC-DC SMPS, and supplies DC power to one or more loads.

By combining at least some of the components described above, the power supply system 10 may be implemented in various forms.

The power conversion apparatus according to the present disclosure may be used as being included in the photovoltaic power generation system or the power supply system, as described above with reference to FIGS. 4 and 5, but its use is not necessarily limited to the foregoing description. In some embodiments, the power conversion apparatus according to the present disclosure may be used in vehicles, portable electronic devices like smartphones, power generation systems other than photovoltaic power generation systems, communication devices such as base stations or servers, etc.

According to various embodiments of the present disclosure, an AC power source or a DC power source may be selectively used, and the power conversion apparatus may operate even in case that either the AC power source or the DC power source is absent or turned off.

The use of all examples or exemplary terms (for example, etc.) in the present disclosure are to simply describe the present disclosure in detail, and unless the range of the present disclosure is not limited by the examples or the exemplary terms unless limited by the claims. It may be understood by those of ordinary skill in the art that various modifications, combinations, and changes may be made according to design conditions and factors within the scope of the appended claims or equivalents thereof.

Thus, the spirit of the present disclosure should not be determined by being limited to the above-described embodiments, and not only the claims to be described later, but also any range equivalent to or equivalently changed from the claims falls within the scope of the spirit of the present disclosure.

## Claims

1. A power conversion apparatus comprising:
an alternating current (AC)-direct current (DC) switched mode power supply (SMPS) configured to receive AC power from an AC power source and output DC power; and
a DC-DC SMPS configured to receive DC power supplied from each of one or more DC power sources and DC power output by the AC-DC SMPS, and supply DC power to one or more loads.

2. The power conversion apparatus of claim 1, wherein the DC powers respectively output to the one or more loads are different from each other.

3. The power conversion apparatus of claim 1, further comprising a rectifier configured to rectify the AC power supplied from the AC power source and output rectified AC power to the AC-DC SMPS.

4. The power conversion apparatus of claim 1, further comprising a link capacitor configured to detect the DC power supplied from each of the one or more DC power sources and the DC power output by the AC-DC SMPS.

5. The power conversion apparatus of claim 1, wherein whether to apply power by the AC power source and each of the one or more DC power sources is determined.

6. A photovoltaic power generation system comprising:
one or more photovoltaic modules configured to generate power;
a grid configured to transmit power generated at a power plant;
a power storage device configured to store power generated by the one or more photovoltaic modules;
one or more loads configured to consume the supplied power; and
a power conversion apparatus configured to convert power supplied by the one or more photovoltaic modules, the grid, and the power storage device and transmit the converted power to the one or more loads,
wherein the power conversion apparatus comprises:
an alternating current (AC)-direct current (DC) switched mode power supply (SMPS) configured to receive AC power from the grid and output DC power; and
a DC-DC SMPS configured to receive DC power supplied from the one or more photovoltaic modules, DC power applied from the power storage device, and DC power output by the AC-DC SMPS, and supply DC power to the one or more loads.

7. The photovoltaic power generation system of claim 6, wherein the DC powers respectively output to the one or more loads are different from each other.

8. The photovoltaic power generation system of claim 6, further comprising a rectifier configured to rectify the AC power supplied from the grid and output rectified AC power to the AC-DC SMPS.

9. The photovoltaic power generation system of claim 6, further comprising a link capacitor configured to detect the DC power supplied from the one or more photovoltaic modules, the DC power applied from the power storage device, and the DC power output by the AC-DC SMPS.

10. The photovoltaic power generation system of claim 6, wherein whether to apply power by each of the grid, the one or more photovoltaic modules, and the power storage device is determined.

11. An energy storage device comprising:
a plurality of battery cells; and
a power conversion module, and wherein the power conversion module comprising:
an alternating current (AC)-direct current (DC) switched mode power supply (SMPS) configured to receive AC power from an AC power source and output DC power; and
a DC-DC SMPS configured to receive DC power supplied from each of one or more DC power sources and DC power output by the AC-DC SMPS, and supply DC power to one or more loads.

12. The energy storage device of claim 11, wherein the DC powers respectively output to the one or more loads are different from each other.

13. The energy storage device of claim 11, further comprising a rectifier configured to rectify the AC power supplied from the AC power source and output rectified AC power to the AC-DC SMPS.

14. The energy storage device of claim 11, further comprising a link capacitor configured to detect the DC power supplied from each of the one or more DC power sources and the DC power output by the AC-DC SMPS.

15. The energy storage device of claim 11, wherein whether to apply power by the AC power source and each of the one or more DC power sources is determined.
